# EUROPEAN PATENT SPECIFICATION

(11) **EP 3 031 039 B1**
(45) Date of publication and mention of the grant of the patent: **12.07.2017**
(21) Application number: 13782859.6
(22) Date of filing: 09.08.2013
(51) Int. Cl.: G08B 17/00, G08B 29/16, G06Q 10/08, G08B 25/04

(54) **SYSTEM FOR TRACKING THE POSITION OF PERSONS OR ITEMS IN STRUCTURES PROVIDED WITH ROOMS INTENDED TO RECEIVE PERSONS OR ITEMS, SUCH AS SHIPS, BUILDINGS OR OFFSHORE PLATFORMS**
SYSTEM ZUR VERFOLGUNG DER POSITION VON PERSONEN ODER GEGENSTÄNDEN IN STRUKTUREN MIT RÄUMEN ZUR AUFNAHME VON PERSONEN ODER OBJEKTEN, WIE SCHIFFE, GEBÄUDE ODER OFFSHORE-PLATTFORMEN
SYSTÈME DE LOCALISATION DE LA POSITION DE PERSONNES OU D´ÉLÉMENTS DANS DES STRUCTURES POURVUES DE PIÈCES PRÉVUES POUR RECEVOIR DES PERSONNES OU DES ÉLÉMENTS, TELS QUE DES NAVIRES, DES BÂTIMENTS OU DES PLATE-FORMES EN MER

(43) Date of publication of application: 15.06.2016
(73) Proprietor: Martec S.p.A., 20900 Monza (MB) (IT)
(72) Inventor: FOGAZZARO, Gian Giacomo, I-20063 Cernusco Sul Naviglio (MI) (IT); BRACCO, Lorenzo, I-12050 Sinio (CN) (IT); GAVAZOV, Valentin Vladimirov, I-12046 Montà (CN) (IT)
(74) Representative: Ciceri, Fabio
(86) International application number: PCT/IT2013/000224
(87) International publication number: WO 2015/019372

(56) References cited:
- EP-A2- 1 814 092
- WO-A1-03/019492
- KR-B1- 100 964 890
- US-A- 4 555 695

## Description

The present invention relates to a system for tracking the position of persons or items in facilities having a plurality of rooms for receiving persons or items, such as ships, building or offshore platforms (e.g. oil rigs).

The problem of tracking the position of persons in buildings and ships is highly felt, particularly but without limitation in emergencies. In these circumstances, the use of persons tracking systems provides quick and accurate position of individuals in a building or ship, to allow quick and effective response of task forces, such as fire and health departments. These tracking systems may be also used for different purposes such as elderly and children care, or for commercial purposes.

Systems for tracking persons, articularly for tracking passengers on ships, are disclosed in US 2011/109434 and US 2011/84830.

US 2011/109434 discloses a system for tracking passengers on cruise ships. This system uses an RFID apparatus in signal communication with a tracking system having appropriate software and a monitor for displaying the map of the ship, to facilitate position of the passenger to be tracked. Signal communication between the RFID apparatus and the tracking system is provided by wired or wireless means. The operation of the RFID system is the traditional operation in which the tracked object is integral with a mobile transponder, known as RFID tag, with fixed transponders, known as RFID readers arranged in monitored areas of the ship. The RFID tags and RFID readers establish a wireless communication through which the system can determine the position of the tag, and hence the object being tracked, by their own logics. In this particular case, the tag generates a signal to indicate its presence and tag position occurs by comparing the powers received by RFID readers.

US 2011/84830 discloses an emergency control system based on tracking the position of passengers on a ship, using a sensor network. Particularly, this tracking system comprises an emergency recognition apparatus, a position apparatus and a central control unit. The emergency recognition apparatus detects accidents on the ship, such as fires, and has a plurality of sensors arranged in various places in the ship. The position apparatus detects passenger position using RFID systems, where RFID readers are arranged in every place of the ship in which the presence of passengers is expected. The operation of the RFID position system is as described above. The emergency control system uses PLC (Power Line Communication) and LAN (WAN) line, separately or simultaneously, to implement a telecommunication network.

While the above described systems allow tracking the position of persons in a ship, the technical solutions suggested thereby do not provide satisfactory passenger position reliability, in terms of both robustness of the system against damage, and installation costs.
The characteristics required of a satisfactory position system, e.g. on a ship, may be summarized as follows:
- Accurate position: the position of the persons being monitored should be correctly detected, with no false position, and no position event should be lost.
- Capillary distribution, for accurate capture of any displacement of the persons being monitored.
- System reliability against adverse events: the system should ensure generally continuous operation when one of its parts is damaged.
- Costs: the system should have a low cost.
Concerning the first item, i.e. accuracy, it should be first considered that ships contain a considerable amount of metal materials, that can reflect and guide the electromagnetic waves generated by RFID readers and tags. Compartments, as well as the floors and ceilings of decks are generally made of steel. Such reflection and guide effects might generate uneven electromagnetic fields, involving the risk of over-detection or under-detection by RFID readers, eventually resulting in wrong position of the person being tracked. These effects are proportional to the powers used by RFID systems. Secondly, it should be considered that the human body tends to shield the electromagnetic waves that are typically used in RFID tracking systems. This requires an increase of the powers used by the RFID system to ensure that position is maintained in any possible configuration. It will be noted that the above issues have diverging power requirements, whereby compromise power levels must be used, which result in poorly reliable systems. A more detailed description of the operation is provided in US 2011/84830, involving the installation of RFID readers in every room of the ship in which the presence of passengers is expected. While this approach is not the optimal solution, it would still provide good accuracy results, due to the density of RFID readers. Nevertheless, this solution is still inadequate. The possibility that a passenger might be in an room where no RFID reader is placed, in an emergency, should not be neglected. Alternatively, RFID readers may be installed in every room of the ship. This would generally increase the installation costs of the tracking system, and particularly wiring costs. Furthermore, the suggested use of a PLC line for data transmission involves a number of drawbacks: it limits data transmission capacity, introduces noise in data transmission and does not provide a system capable of ensuring both reliability and capillarity. Main power lines typically have a capillary distribution but do not ensure robustness against damage, whereas emergency power lines are reliable but have no capillary distribution.

WO 03/019492 A1 discloses a system according to the preamble of claim 1. The above description of the prior art clearly shows that there is a need for a system for accurate, capillary and reliable tracking the position of persons and items in buildings, ships and the like, that has low installation and wiring costs.

In view of the above discussed prior art, the object of the present invention is to fulfill the above need, while obviating the prior art drawbacks.

According to the present invention, this object is fulfilled by a system for tracking the position of persons or items as defined in claim 1.

The characteristics and advantages of the present invention will appear from the following detailed description of one practical embodiment, which is illustrated without limitation in the annexed drawings, in which:

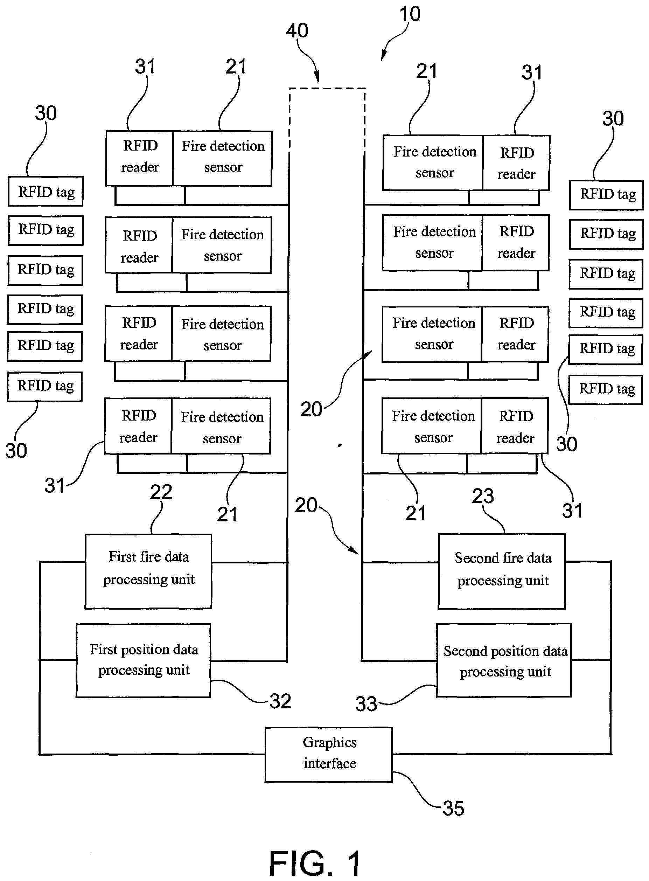

- Figure 1 shows a block diagram of a first embodiment of the tracking system of the present invention,

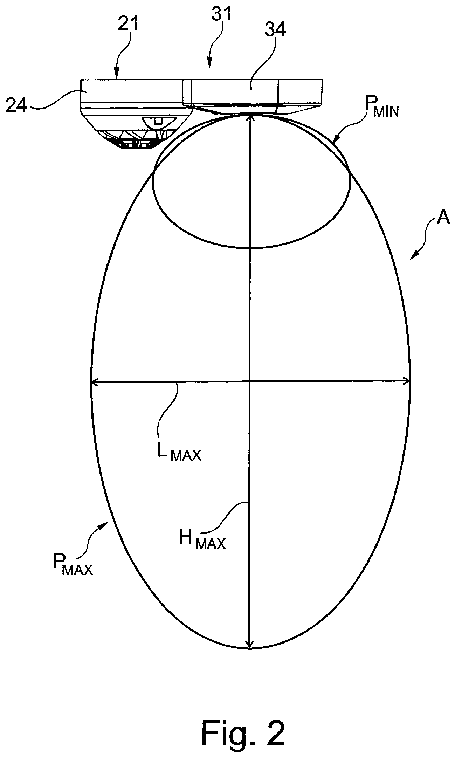

- Figure 2 is a diagrammatic view of an RFID reader used in the system of Figure 1,

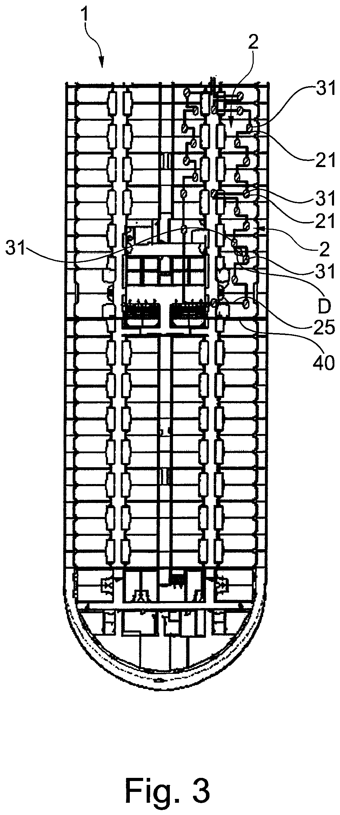

- Figure 3 shows an exemplary implementation of the tracking system of the present invention on a ship,

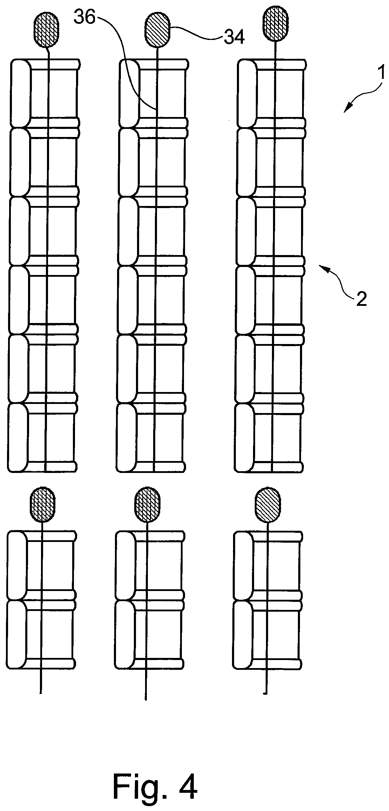

- Figure 4 shows an exemplary implementation of the tracking system of the present invention in a theater,

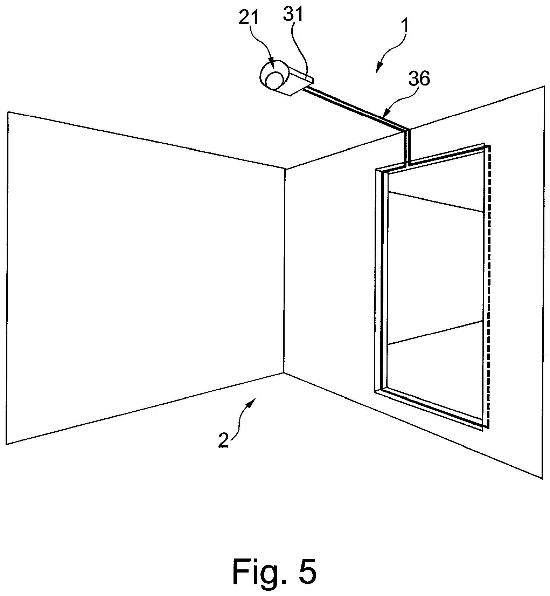

- Figure 5 shows an exemplary implementation of the tracking system with the antenna of the RFID reader encircling a door,

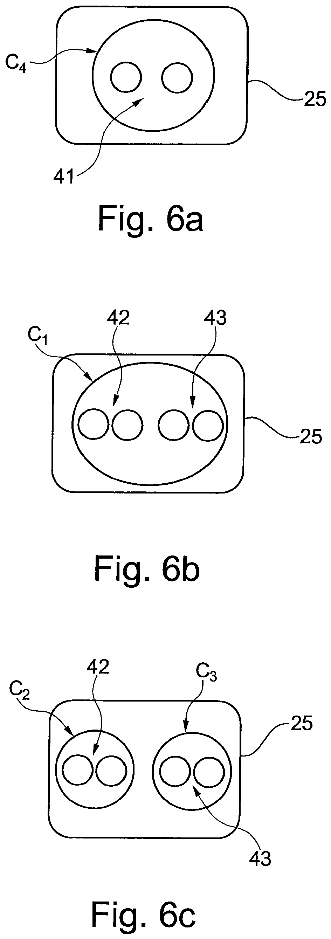

- Figures 6a, 6b and 6c show different embodiments of the bipolar line of the tracking system of Figure 1,

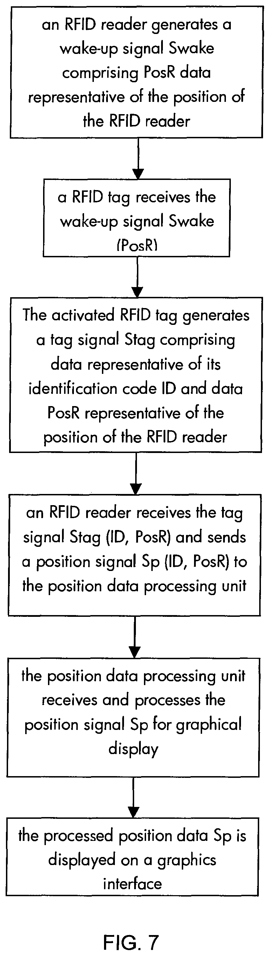

- Figure 7 shows a flowchart of a tracking method that is carried out using the system of the present invention.

Referring to the annexed figures, numeral 10 generally designates a system for tracking the position of persons or items according to an embodiment of the present invention.

The system 10 is able to track the position of persons or items in a facility 1 comprising a plurality of rooms 2 intended to receive a plurality of persons or items.

For example, the system 10 may find application in system for tracking the position of persons or items in buildings, ships and oil rigs. Particularly, persons position tracking may have safety and emergency handling purposes, in emergency situations, or commercial purposes, especially at points-of-sale, or elderly and children care purposes, should elderly persons or children get lost in the rooms 2.

For conciseness, reference will be made hereinafter, without limitation, to a method of tracking persons in a passenger ship.

The system 10 comprises a fire detection system 20. This fire detection system 20 comprises a plurality of fire detection sensors 21 and at least one fire data processing unit, here a first fire data processing unit 22 and a second fire data processing unit 23. For conciseness, reference will be made hereinafter, without limitation, to the first fire data processing unit 22. The advantages provided by the use of the second fire data processing unit 23 will be detailed hereinafter.

Fire detection sensors 21 are placed in the rooms 2, preferably in a series connection scheme. The fire detection sensors 21 are advantageously placed on the ceiling of the rooms, in such position as to be able to effective sense any smoke, flame or heat change or any initial fire.

Each fire detection sensor 21 is configured to generate an alarm signal Sal.

The first fire data processing unit 22 is in signal communication with the fire detection sensors 21 and is able to receive the alarm signals Sal generated by the fire detection sensors.

It should be noted that the fire detection system 20 has the following characteristics: high reliability against adverse events; full topological coverage, particularly on ships. The above mentioned characteristics are of great interest for the tracking system 10, as explained below.

In order to track the position of persons moving through the rooms 2, the system 10 comprises a plurality of RFID tags 30, a plurality of RFID readers 31 and at least one position data processing unit 32, here a first position data processing unit 32 and a second position data processing unit 33. For conciseness, reference will be made hereinafter, without limitation, to the first position data processing unit 32. The advantages provided by the use of the second position data processing unit 33 will be detailed hereinafter.

Each RFID tag 30 is able to be associated to one person intended to move through the rooms 2. It shall be noted that each RFID tag 30 has a unique identification code ID. Therefore, associating an RFID tag 30 with a person allows such identification code ID to provide unique identification of that person, as long as the latter has the associated RFID tag 30 thereon.

In one embodiment, the RFID tag 30 may be applied to a bracelet, a brooch or an identification badge.

In one embodiment, the RFID tag 30 is active, i.e. having its own power source. Nevertheless, the present invention is intended to also cover embodiments in which the RFID tag 30 is passive, i.e. where the electromagnetic field generated by the RFID reader provides the RFID tag with the power required for its operation.

The RFID readers 31 are arranged in the rooms 2 at their respective fire detection sensors. In a preferred embodiment, the RFID readers 31 are stably mounted to elements defining the rooms 2, e.g. ceilings or false ceilings, or to elements placed within the rooms 2.

Each RFID reader 31 is configured to detect an RFID tag 30, advantageously by means of mechanisms that will be better explained below and, upon detection of the RFID tag 30, to generate a position signal Sp representative of the detected RFID tag 30 and the position of the RFID tag 31.

The position data processing unit 32 is in signal communication with the RFID readers 31 and is able to receive the position signals Sp generated by the RFID readers 31.

The system 10 further comprises at least one bipolar line 40, extending in the rooms 2.

In a first embodiment, the system 10 comprises a single bipolar line 41.

In a second embodiment, the system 10 comprises two bipolar lines 42, 43.

For simplicity and unless otherwise stated, reference will be made hereinafter to a "bipolar line" to designate both embodiments.

The bipolar line is configured to establish signal communication between the fire detection sensors 21 and the RFID readers 31 and the fire data processing units 22 and 23 and the position data processing units 32 and 33 respectively, and to supply power to the fire detection sensors 21 and the RFID readers 31. The use of this bipolar line in combination with the arrangement of the RFID readers 31 close to their respective fire detection sensors 21 provides the fire detection system 20 with a capillarity feature and reduces the costs for installation and wiring of the tracking system. Particularly in new constructions, either buildings or ships, the tracking system 10 will benefit from the infrastructure designed for the fire detection system 20. If a tracking system is installed in buildings or ships that already have a fire detection system, the tracking system may use the single bipolar line of the fire detection system, or a second bipolar line may be provided, dedicated to the tracking system and lying adjacent to the existing line. These aspects will be better explained hereinafter. It should be noted that the common use of the above mentioned infrastructure allows the position system 10 to benefit from the reliability and robustness against damage of the infrastructure of fire detection systems in general and of fire detection systems in ships in particular, and affords capillary coverage of the entire ship, while reducing installation and wiring costs.

Typically, the fire detection system 20 comprises a cable duct 25 extending in the rooms 2, and leading to each fire detection sensor 21. This cable duct 25 may be advantageously used for accommodation of the bipolar line, thereby further reducing the costs for installation and wiring of the tracking system.

As disclosed above, in a first embodiment, the system 10 comprises a single bipolar line 41, which is used to transmit the alarm signals Sal generated by the fire detection sensors 21 and the position sensors Sp generated by the RFID readers 31.

In this first embodiment, the alarm signals Sal and the position signals Sp are transmitted over the single bipolar line 41. The single bipolar line 41 is further configured to supply power to the fire detection sensor 21 and the RFID readers 31.

For this purpose, a frequency separation is obtained between the alarm signals Sal and the position signals Sp. For example, if the position signals Sp are modulated by a carrier frequency, the alarm signals Sal may remain in the baseband, and lowpass filters and band-pass filters may be provided at the first fire data processing unit 22 and the first position data processing unit 32 respectively, otherwise two distinct frequency bands may be used.

Alternatively, the alarm signals Sal and the position signals Sp may be transmitted at a single frequency, at different times.

According to a second embodiment, the system 10 comprises a first bipolar line 42 for the fire detection system 10 and a second bipolar line 43 for the RFID readers 31, which extends adjacent to the first bipolar line 42.

The first bipolar line 42 is configured to establish signal communication between the fire detection sensors 21 and the first fire data processing unit 22 and to supply power to the fire detection sensors 21.

The second bipolar line 43 is configured to establish signal communication between the RFID readers 31 and the first position data processing unit 32 and to supply power to the RFID readers 31.

The first bipolar line 42 and the second bipolar line 43 may be embedded in a single four-pole cable C1, or in two distinct but adjacent two-pole cables C2, C3. Referring to the first embodiment having a single bipolar line, a single two-pole cable C4 will be obviously provided.

The four-pole cable C1 or the two two-cable cables C2, C2, or the single two-pole cable C4 may be advantageously placed in the cable duct 25 that extends in the rooms 2 to reach each fire detection sensor 21. Obviously, when two cables C2, C3 are provided, the use of two adjacent cable ducts shall be intended to be covered by the scope of the present invention.

Advantageously, each RFID reader 31 is placed immediately adjacent to a respective fire detection sensor 21. Particularly, in each pair composed of an RFID reader 31 and its respective fire detection sensor 21, the fire detection sensor 21 may be disposed within a first enclosure 24 and the RFID reader 31 may be disposed in a second enclosure 34, otherwise the fire detection sensor 21 and the RFID reader 31 may be disposed in a single enclosure.

When two enclosures are provided, the second enclosure 34 is separated from the first enclosure 24 and placed adjacent to the first enclosure 24. This will maintain the advantages of a cost-effective installation, and fulfill further requirements, such as the requirement of accommodating the RFID readers 31 in dedicated enclosures 34, when there is not enough room in the enclosures 24 of the fire detection sensors 21. It should be noted that, due to the common use of the above mentioned infrastructure of the fire detection system 20, the system 10 already provides an improvement with respect to the prior art, in terms of accuracy, reliability and robustness against damage, capillarity and costs.

In one embodiment, which provides optimized use of the capillarity provided by the above described system 10 for the purpose of accurate position, each RFID reader 31 is configured to generate a wake-up signal Swake. Particularly, the wake-up signal Swake is an electromagnetic signal generated over the air.

Advantageously, the wake-up signal Swake is a low-frequency signal, preferably in the range from 10 KHz to 1 MHz. The use of a low-frequency wake-up signal Swake prevents the creation of waveguides, as the metal structures have such a size as to be unable to guide this low-frequency signal. Since the human body is substantially transparent to low frequencies, the low frequency may be advantageously combined with a low power of the wake-up signal Swake, thereby preventing any reflection in the rooms 2 and thus avoid wrong position problems.

The signal Swake can activate an RFID tag 30 in a preset area A around the RFID reader 31. This preset area A corresponds to the lobe of the wake-up signal Swake generated by the RFID reader 31.

The lobe of the wake-up signal Swake has a width Lmax, typically smaller than or equal to the distance D between two contiguous RFID readers 31 and a maximum height Hmax. By this arrangement, the wake-up signal Swake may be radiated to the various rooms 2, such that the areas that are not covered by the lobes of the RFID readers 31, and the risk of wrong positions may be minimized.

Preferably, the lobes of the wake-up signals Swake of two contiguous RFID readers 31 have such a shape as to avoid mutual overlapping. This will prevent the risk that two RFID readers 31 may activate the same RFID tag 30, which will cause uncertainty about the position of the person having the activated RFID tag 30 thereon. This will be described in greater detail hereinbelow.

It shall be noted that the RFID readers 31 can be configured in terms of power of the wake-up signal Swake, from a minimum value Pmin to a maximum value Pmax, such that the lobes may be changed both in their maximum width Lmax and in their maximum height Hmax. For example, the values Pmax and Lmax may be set to a value ranging from 0 meters to 10 meters.

The wake-up signal Swake generated by an RFID reader 31 comprises PosR data representative of the position of the RFID reader 31.

Upon receiving a wake-up signal Swake by an RFID reader 31, each RFID tag 30 is configured to generate an electromagnetic signal Stag over the air, which comprises data representative of its own identification code ID and the PosR data representative of the position of the RFID reader 31 which generated the wake-up signal Swake received by the RFID tag 30.

Advantageously, the tag signal Stag is a high-frequency electromagnetic signal generated over the air, preferably ranging from 500 MHz to 10 GHz. The use of a high-frequency tag signal Stag is particularly advantageous, because this tag signal Stag may be detected by any RFID reader 31, not necessarily the RFID reader 31 that activated the RFID tag 30. Furthermore, unlike low-frequency signals, a high-frequency signal may be easily generated also by small-size devices such as a tag. This does not affect the reliability of position tracking of the RFID tag 30, and hence the person associated therewith, as the position data PosR is provided to the activated RFID tag 30 by the RFID reader 31 that activates the RFID tag 30. With this scheme, reflections and waveguides, which are often important in metal rooms, such as ships or offshore platforms, are no longer a limiting noise, but an advantage.

For example, the power of the wake-up signal Swake, either at low frequency or at low frequency, may be set to a value ranging from 10 mW to 500 mW.

The arrangements as described above, which are provided to prevent two RFID readers 31 from activating the same RFID tag 30, show the highly advantageous feature of the low-frequency and high-frequency signals, respectively for the wake-up signals Swake and the tag signals Stag.

Each RFID reader 31 is configured to receive a tag signal Stag generated by an activated RFID tag 30, and to send a position signal Sp to the position data processing unit 32, with the position signal Sp comprising the identification code ID of the RFID tag 30 and the PosR representative of the position of the RFID reader 31 that generated the wake-up signal Swake.

Generally, each RFID reader 31 is placed in an enclosure and comprises a radiating antenna 36 for radiating the wake-up signal Swake that can activate an RFID tag 30.

In view of fulfilling special requirements, the antenna 36 may be located outside the enclosure 34 to radiate the wake-up signal Swake at a distance from the RFID reader 31. This configuration is advantageous when the RFID reader 31 is mounted to the ceiling and the distance between the ceiling and the floor is greater than the height of the lobe of the wake-up signal Swake, which would prevent detection of any RFID tag 30. This occurs, for instance, in theaters or generally in rooms having very high ceilings, such as shopping malls, sheds, etc.

Once the position data processing unit 32 has received the position signals Sp generated by said RFID readers 31, these signals Sp may be appropriately processed to be rendered in graphical form, such that they may be displayed on a graphics interface 35. This graphics interface 35 is embodied by one or more monitors, which may display a map of the rooms of the ship, the building or the offshore platform, as well as the position of the RFID readers 13, for position tracking of the person or item in these rooms 2.

As mentioned above, the fire detection system 20 may comprise a second fire data processing unit 23, which is also configured to be in signal communication with the fire detection sensors 21 and is able to receive the alarm signals Sal generated by the fire detection sensors 21.

The first and second fire data processing units 22, 23 of the fire detection system 20 are located at the ends of the bipolar line 40. Thus, if a failure occurs in a fire detection sensor 21, e.g. the n^{th} sensor, this will not affect detection by the sensors upstream or downstream from the n^{th} sensor, since fire detection is carried out by the first fire data detection unit 22 up to the n^{th} sensor, and by the second fire data processing unit 23 from the n^{th} sensor + 1 on.

This arrangement also facilitates the identification of the malfunctioning n^{th} sensor.

The fire detection system 20 ensures high reliability, which may be extended to the position tracking components that share the infrastructure of such fire detection system 20, as mentioned above, if two position data processing unit 32 and 33 are used, with a configuration identical to that described concerning the fire detection system 20.

It shall be noted that the fire detection system 20 comprises an autonomous uninterruptible power supply which may both supply power to the fire detection sensors 21 and to the first and second fire data processing units 22, 23, and supply power to the plurality of RFID readers 31 and to the position data tracking unit 32.

It will be appreciated that the system of the present invention fulfills the intended purposes.

Those skilled in the art will obviously appreciate that a number of changes and variants may be made to the arrangements as described hereinbefore to meet incidental and specific needs.

All the changes will fall within the scope of the invention, as defined in the following claims.

## Claims

1. A system (10) for tracking the position of persons or items in facilities (1) having a plurality of rooms (2) for receiving a plurality of persons or items, such as ships, building or offshore platforms, said system (10) comprising:
- a fire detection system (20) comprising:
- a plurality of fire detection sensors (21) arranged in said rooms (2), each fire detection sensor (21) being configured to generate an alarm signal (Sal),
- at least one fire data processing unit (22, 23) in signal communication with said plurality of fire detection sensors (21) and able to receive the alarm signals (Sal) generated by the fire detection sensors (21),
- a plurality of RFID tags (30), each RFID tag (30) being able to be associated with a respective person or item, intended to move in said rooms (2),
- a plurality of RFID readers (31) arranged in said rooms (2), each RFID reader (31) being arranged at a respective fire detection sensor (21) and being configured to detect an RFID tag (30) and to generate a position signal (Sp) representative of the detected RFID tag (30) and the position of said RFID tag (31),
- at least one position data processing unit (32) in signal communication with said plurality of RFID readers (31) and able to receive the position signals (Sp) generated by said RFID readers (31),
- at least one bipolar line (40) extending in said plurality of rooms (2), said at least one bipolar line (40) being configured to:
- establish signal communication between said plurality of fire detection sensors (21) and said at least one fire data processing unit (22),
- establish signal communication between said plurality of RFID readers (31) and said at least one position data processing unit (32),
- supply power to said plurality of fire detection sensors (21) and said plurality of RFID readers (31),
- each RFID reader (31) being configured to generate a wake-up signal (Swake) able to activate an RFID tag (30) in a preset area (A) around said RFID reader (31), said preset area (A) corresponding to the lobe of the wake-up signal (Swake) generated by the RFID reader (31);
- each RFID tag (30) being associated with an identification code (ID),
**characterised in that**
- said wake-up signal (Swake) comprises data (PosR) representative of the position of the RFID reader (31) that generated said wake-up signal (Swake),
- upon receiving a wake-up signal (Swake) by an RFID reader (31), each RFID tag (30) is configured to generate a tag signal (Stag), which comprises data representative of its own identification code (ID) and the data (PosR) representative of the position of the RFID reader (31) which generated said wake-up signal (Swake).

2. The system (10) as claimed in claim 1, wherein said fire detection system (20) comprises a cable duct (25) extending in said plurality of rooms (2), said at least one bipolar line (40) being laid in said cable duct (25).

3. The system (10) as claimed in claim 1 or 2, wherein:
- said at least one bipolar line is a single bipolar line (41),
- said alarm signals (Sal) and said position signals (Sp) are transmitted over said single bipolar line (41),
- said single bipolar line (41) being configured to supply power to said plurality of fire detection sensors (21) and said plurality of RFID readers (31).

4. The system (10) as claimed in claim 3, wherein said alarm signals (Sal) and said position signals (Sp) are transmitted over said single bipolar line (41), are encoded by analog modulation or digital modulation and are separated by frequency using two distinct frequency bands.

5. The system (10) as claimed in claim 3, wherein said alarm signals (Sal) and said position signals (Sp) are transmitted over said single bipolar line (41) are encoded by analog modulation or digital modulation, occupy the same frequency band, and are separated in time.

6. The system (10) as claimed in claim 1 or 2, wherein said at least one bipolar line comprises:
- a first bipolar line (42) configured to establish signal communication between said fire detection sensors (21) and said at least one fire data processing unit (22) and to supply power to said fire detection sensors (21),
- a second bipolar line (43), extending adjacent to said first bipolar line (42), said second bipolar line (43) being configured to establish signal communication between said RFID readers (31) and said at least one position data processing unit (32) and to supply power to said RFID readers (31).

7. The system (10) as claimed in claim 6, wherein said first bipolar line (42) and said second bipolar line (43) are embedded in a single cable.

8. The system (10) as claimed in claim 6, wherein said first bipolar line (42) and said second bipolar line (43) are embedded in distinct cables.

9. The system (10) as claimed in any of claims from 1 to 8, wherein each RFID reader (31) is arranged directly adjacent to a respective fire detection sensor (21).

10. The system (10) as claimed in any of claims from 1 to 9 wherein, in each pair composed of an RFID reader (31) and its respective fire detection sensor (21), the fire detection sensor (21) is disposed within a first enclosure (24) and the RFID reader (31) is disposed in a second enclosure (34), said second enclosure (34) being separated from said first enclosure (24) and adjacent to said first enclosure (24).

11. The system (10) as claimed in any of claims from 1 to 9 wherein, in each pair composed of an RFID reader (31) and its respective fire detection sensor (21), the fire detection sensor (21) and the RFID reader (31) are disposed in a single enclosure.

12. The system (10) as claimed in claim 11, wherein said wake-up signal (Swake) is a low-frequency signal, preferably in a range from 10 KHz to 1 MHz.

13. The system (10) as claimed in claim 11 or 12, wherein the maximum width (Lmax) of each lobe is smaller than or equal to the distance (D) between two contiguous RFID readers (31).

14. The system (10) as claimed in any of claims from 11 to 13, wherein the lobes of the wake-up signals (Swake) of two contiguous RFID readers (31) have such a shape as to avoid mutual overlapping.

15. The system (10) as claimed in claim 1, wherein said tag signal (Stag) is a high-frequency signal, preferably in a range from 500 MHz to 10 GHz.

16. The system (10) as claimed in claim 1, wherein each RFID reader (31) is configured to receive said tag signal (Stag) generated by an activated RFID tag (30), and to send a position signal (Sp) to the at least one position data processing unit (32), wherein said position signal (Sp) comprises the identification code (ID) of the RFID tag (30) and the data (PosR) representative of the position of the RFID reader (31) that activated said RFID tag (30).

17. The system (10) as claimed in any of claims from 1 to 16, wherein each RFID reader (31) is placed in an enclosure and comprises a radiating antenna for radiating a wake-up signal (Swake) that can activate an RFID tag (30).

18. The system (10) as claimed in claim 17, wherein said antenna is located outside said enclosure.

19. The system (10) as claimed in claim 18, wherein said antenna is located outside said enclosure to radiate said wake-up signal (Swake) at a distance from said RFID reader (31).

20. The system (10) as claimed in any of claims from 1 to 19, wherein said at least one fire data processing unit comprises a first fire data processing unit (22) and a second fire data processing unit (23), said first and second fire data processing units (22, 23) being in signal communication with said plurality of fire detection sensors (21), and being able to receive the alarm signals (Sal) generated by said fire detection sensors (21).

21. The system (10) as claimed in any of claims from 1 to 20, wherein said at least one position data processing unit comprises a first position data processing unit (32) and a second position data processing unit (33), said first and second fire position data processing units (32, 33) being in signal communication with said plurality of RFID readers (31), and being able receive said position signals (Sp) generated by said RFID readers (31).

22. The system (10) as claimed in any of claims from 1 to 21, comprising a graphics interface (35) configured to display said position signals (Sp) in graphical form.

23. A method (10) for tracking the position of persons or items in facilities (1) having a plurality of rooms (2) for receiving a plurality of persons or items, using a system (10) as claimed in any of claims from 1 to 25, said method **comprising the steps** of:
- generating, by an RFID reader (31), a wake-up signal (Swake) that can activate an RFID tag (30) in a preset area (A) around said RFID reader (31), said preset area (A) corresponding to the lobe of the wake-up signal (Swake) generated by the RFID reader (31), wherein said wake-up signal (Swake) comprises data (PosR) representative of the position of said RFID reader (31),
- receiving, by said activated RFID tag (30), said wake-up signal (Swake),
- generating, by said activated RFID tag (30), a tag signal (Stag) comprising data representative of its own identification code (ID) and the data (PosR) representative of the position of the RFID reader (31) which generated said wake-up signal (Swake),
- receiving, by an RFID reader (31), said tag signal (Stag) generated by said activated RFID tag (30) and sending a position signal (Sp) to said position data processing unit (32), wherein said position signal (Sp) comprises the identification code (ID) of said RFID tag (30) and the data (PosR) representative of the position of the RFID reader (31) that activated the RFID tag (30).

24. The method as claimed in claim 23, wherein said wake-up signal (Swake) is a low-frequency signal, preferably in a range from 10 KHz to 1 MHz.

25. The method as claimed in claim 23 or 24, wherein said tag signal (Stag) is a high-frequency signal, preferably in a range from 500 MHz to 10 GHz.

## Patentansprüche

1. System (10) zur Nachführung der Position von Personen oder Objekten in Einrichtungen (1) mit einer Mehrzahl von Räumen (2) zur Aufnahme einer Mehrzahl von Personen oder Objekten, wie beispielsweise Schiffe, Gebäude oder Offshore-Plattformen, wobei das System (10) Folgendes umfasst:
- ein Branderkennungssystem (20) umfassend:
- eine Mehrzahl von Branderkennungssensoren (21), die in den Räumen (2) angeordnet sind, wobei jeder Branderkennungssensor (21) ausgebildet ist, um ein Alarmsignal (Sal) zu erzeugen,
- wenigstens eine Branddatenverarbeitungseinheit (22, 23), die in Signalverbindung mit der Mehrzahl von Branderkennungssensoren (21) steht und in der Lage ist, die von den Branderkennungssensoren (21) erzeugten Alarmsignale (Sal) zu empfangen,
- eine Mehrzahl von RFID-Etiketten (30), wobei jedes RFID-Etikett (30) in der Lage ist, jeweils mit einer Person oder einem Objekt verbunden zu werden, die/das dazu bestimmt ist, sich in den Räumen (2) zu bewegen,
- eine Mehrzahl von in den Räumen (2) angeordneten RFID-Lesegeräten (31), wobei jedes RFID-Lesegerät (31) an einem jeweiligen Branderkennungssensor (21) angeordnet und ausgebildet ist, um ein RFID-Etikett (30) zu erfassen und ein Positionssignal (Sp) zu erzeugen, das repräsentativ für das erfasste RFID-Etikett (30) und die Position des RFID-Etiketts (31) ist,
- wenigstens eine Positionsdatenverarbeitungseinheit (32), die in Signalverbindung mit der Mehrzahl von RFID-Lesegeräten (31) steht und in der Lage ist, die von den RFID-Lesegeräten (31) erzeugten Positionssignale (Sp) zu empfangen,
- wenigstens eine zweipolige Leitung (40), die sich in der Mehrzahl von Räumen (2) erstreckt, wobei die wenigstens eine zweipolige Leitung (40) ausgebildet ist, um:
• eine Signalverbindung zwischen der Mehrzahl von Branderkennungssensoren (21) und der wenigstens einen Branddatenverarbeitungseinheit (22) herzustellen,
• eine Signalverbindung zwischen der Mehrzahl von RFID-Lesegeräten (31) und der wenigstens einen Positionsdatenverarbeitungseinheit (32) herzustellen,
• die Mehrzahl von Branderkennungssensoren (21) und die Mehrzahl von RFID-Lesegeräten (31) mit Strom zu versorgen,
- wobei jedes RFID-Lesegerät (31) ausgebildet ist, um ein Wecksignal (Swake) zu erzeugen, das in der Lage ist, ein RFID-Etikett (30) in einem voreingestellten Bereich (A) rund um das RFID-Lesegerät (31) zu aktivieren, wobei der voreingestellte Bereich (A) der Keule des vom RFID-Lesegerät (31) erzeugten Wecksignals (Swake) entspricht;
- wobei jedes RFID-Etikett (30) mit einem Identifizierungscode (ID) verbunden ist, **dadurch gekennzeichnet, dass**
• das Wecksignal (Swake) Daten (PosR) umfasst, die repräsentativ für die Position des RFID-Lesegeräts (31) sind, welches das Wecksignal (Swake) erzeugt hat,
• bei Empfang eines Wecksignals (Swake) von einem RFID-Lesegerät (31) jedes RFID-Etikett (30) ausgebildet ist, um ein Kennzeichnungssignal (Stag) zu erzeugen, welches Daten umfasst, die repräsentativ für seinen eigenen Identifizierungscode (ID) sind, und die Daten (PosR), die repräsentativ für die Position des RFID-Lesegeräts (31) sind, welches das Wecksignal (Swake) erzeugt hat.

2. System (10) nach Anspruch 1, wobei das Branderkennungssystem (20) einen Kabelkanal (25) umfasst, der sich in der Mehrzahl der Räume (2) erstreckt, wobei wenigstens eine zweipolige Leitung (40) in dem Kabelkanal (25) verlegt ist.

3. System (10) nach Anspruch 1 oder 2, wobei:
- die wenigstens eine zweipolige Leitung eine einzelne zweipolige Leitung (41) ist,
- die Alarmsignale (Sal) und die Positionssignale (Sp) über die einzelne zweipolige Leitung (41) übertragen werden,
- die einzelne zweipolige Leitung (41) ausgebildet ist, um die Mehrzahl von Branderkennungssensoren (21) und die Mehrzahl von RFID-Lesegeräten (31) mit Strom zu versorgen.

4. System (10) nach Anspruch 3, wobei die Alarmsignale (Sal) und die Positionssignale (Sp) über die einzelne zweipolige Leitung (41) übertragen werden, durch analoge Modulation oder digitale Modulation codiert werden und durch Frequenz getrennt sind, wobei zwei verschiedene Frequenzbänder verwendet werden.

5. System (10) nach Anspruch 3, wobei die Alarmsignale (Sal) und die Positionssignale (Sp) über die einzelne zweipolige Leitung (41) übertragen werden, durch analoge Modulation oder digitale Modulation codiert werden, dasselbe Frequenzband belegen und zeitlich getrennt sind.

6. System (10) nach Anspruch 1 oder 2, wobei die wenigstens eine zweipolige Leitung Folgendes umfasst:
- eine erste zweipolige Leitung (42), die ausgebildet ist, um eine Signalverbindung zwischen den Branderkennungssensoren (21) und der wenigstens einen Branddatenverarbeitungseinheit (22) herzustellen und die Branderkennungssensoren (21) mit Strom zu versorgen,
- eine zweite zweipolige Leitung (43), die sich benachbart zur ersten zweipoligen Leitung (42) erstreckt, wobei die zweite zweipolige Leitung (43) ausgebildet ist, um eine Signalverbindung zwischen den RFID-Lesegeräten (31) und der wenigstens einen Positionsdatenverarbeitungseinheit (32) herzustellen und die RFID-Lesegeräte (31) mit Strom zu versorgen.

7. System (10) nach Anspruch 6, wobei die erste zweipolige Leitung (42) und die zweite zweipolige Leitung (43) in einem einzelnen Kabel eingebettet sind.

8. System (10) nach Anspruch 6, wobei die erste zweipolige Leitung (42) und die zweite zweipolige Leitung (43) in verschiedenen Kabeln eingebettet sind.

9. System (10) nach einem der Ansprüche 1 bis 8, wobei jedes RFID-Lesegerät (31) unmittelbar benachbart zu einem jeweiligen Branderkennungssensor (21) angeordnet ist.

10. System (10) nach einem der Ansprüche 1 bis 9, wobei in jedem aus einem RFID-Lesegerät (31) und seinem jeweiligen Branderkennungssensor (21) bestehenden Paar der Branderkennungssensor (21) in einem ersten Gehäuse (24) angeordnet ist und das RFID-Lesegerät (31) in einem zweiten Gehäuse (34) angeordnet ist, wobei das zweite Gehäuse (34) getrennt von dem ersten Gehäuse (24) und benachbart zu dem ersten Gehäuse (24) ist.

11. System (10) nach einem der Ansprüche 1 bis 9, wobei in jedem aus einem RFID-Lesegerät (31) und seinem jeweiligen Branderkennungssensor (21) bestehenden Paar der Branderkennungssensor (21) und das RFID-Lesegerät (31) in einem einzelnen Gehäuse angeordnet sind.

12. System (10) nach Anspruch 11, wobei das Wecksignal (Swake) ein Niederfrequenzsignal ist, vorzugsweise in einem Bereich von 10 KHz bis 1 MHz.

13. System (10) nach Anspruch 11 oder 12, wobei die maximale Breite (Lmax) einer jeden Keule kleiner oder gleich dem Abstand (D) zwischen den beiden nebeneinander liegenden RFID-Lesegeräten (31) ist.

14. System (10) nach einem der Ansprüche 11 bis 13, wobei die Keulen des Wecksignals (Swake) zweier nebeneinander liegender RFID-Lesegeräte (31) eine derartige Form aufweisen, dass ein gegenseitiges Überlappen vermieden wird.

15. System (10) nach Anspruch 1, wobei das Kennzeichnungssignal (Stag) ein Hochfrequenzsignal ist, vorzugsweise in einem Bereich von 500 MHz bis 10 GHz.

16. System (10) nach Anspruch 1, wobei jedes RFID-Lesegerät (31) ausgebildet ist, um das von einem aktivierten RFID-Etikett (30) erzeugte Kennzeichnungssignal (Stag) zu empfangen und um ein Positionssignal (Sp) an die wenigstens eine Positionsdatenverarbeitungseinheit (32) zu senden, wobei das Positionssignal (Sp) den Identifizierungscode (ID) des RFID-Etiketts (30) und die Daten (PosR) umfasst, die repräsentativ für die Position des RFID-Lesegeräts (31) sind, welches das RFID-Etikett (30) aktiviert hat.

17. System (10) nach einem der Ansprüche 1 bis 16, wobei jedes RFID-Lesegerät (31) in einem Gehäuse untergebracht ist und eine Abstrahlantenne zum Abstrahlen eines Wecksignals (Swake) umfasst, das ein RFID-Etikett (30) aktivieren kann.

18. System (10) nach Anspruch 17, wobei die Antenne außerhalb des Gehäuses angeordnet ist.

19. System (10) nach Anspruch 18, wobei die Antenne außerhalb des Gehäuses angeordnet ist, um das Wecksignal (Swake) in einem Abstand von dem RFID-Lesegerät (31) abzustrahlen.

20. System (10) nach einem der Ansprüche 1 bis 19, wobei die wenigstens eine Branddatenverarbeitungseinheit eine erste Branddatenverarbeitungseinheit (22) und eine zweite Branddatenverarbeitungseinheit (23) umfasst, wobei die erste und die zweite Branddatenverarbeitungseinheit (22, 23) in Signalverbindung mit der Mehrzahl von Branderkennungssensoren (21) stehen und in der Lage sind, die von den Branderkennungssensoren (21) erzeugten Alarmsignale (Sal) zu empfangen.

21. System (10) nach einem der Ansprüche 1 bis 20, wobei die wenigstens eine Positionsdatenverarbeitungseinheit eine erste Positionsdatenverarbeitungseinheit (32) und eine zweite Positionsdatenverarbeitungseinheit (33) umfasst, wobei die erste und die zweite Positionsdatenverarbeitungseinheit (32, 33) in Signalverbindung mit der Mehrzahl von RFID-Lesegeräten (31) stehen und in der Lage sind, die von den RFID-Lesegeräten (31) erzeugten Positionssignale (Sp) zu empfangen.

22. System (10) nach einem der Ansprüche 1 bis 21, umfassend eine graphische Schnittstelle (35), die zur Anzeige der Positionssignale (Sp) in graphischer Form ausgebildet ist.

23. Verfahren (10) zur Nachführung der Position von Personen oder Objekten in Einrichtungen (1) mit einer Mehrzahl von Räumen (2) zur Aufnahme einer Mehrzahl von Personen oder Objekten, bei welchem ein System (10) gemäß einem der Ansprüche 1 bis 25 verwendet wird, wobei das Verfahren **folgende Schritte umfasst:**
- Erzeugen - durch ein RFID-Lesegerät (31) - eines Wecksignals (Swake), das in der Lage ist, ein RFID-Etikett (30) in einem voreingestellten Bereich (A) rund um das RFID-Lesegerät (31) zu aktivieren, wobei der voreingestellte Bereich (A) der Keule des vom RFID-Lesegerät (31) erzeugten Wecksignals (Swake) entspricht, wobei das Wecksignal (Swake) Daten (PosR) umfasst, die repräsentativ für die Position des RFID-Lesegeräts (31) sind,
- Empfangen des Wecksignals (Swake) durch das aktivierte RFID-Etikett (30),
- Erzeugen - durch das aktivierte RFID-Etikett (30) - eines Kennzeichnungssignals (Stag) umfassend Daten, die repräsentativ für seinen eigenen Identifizierungscode (ID) sind, und die Daten (PosR), die repräsentativ für die Position des RFID-Lesegeräts (31) sind, welches das Wecksignal (Swake) erzeugt hat,
- Empfangen - durch ein RFID-Lesegerät (31) - des von dem aktivierten RFID-Etikett (30) erzeugten Kennzeichnungssignals (Stag) und Senden eines Positionssignals (Sp) an die Positionsdatenverarbeitungseinheit (32), wobei das Positionssignal (Sp) den Identifizierungscode (ID) des RFID-Etiketts (30) und die Daten (PosR) umfasst, die repräsentativ für die Position des RFID-Lesegeräts (31) sind, welches das RFID-Etikett (30) aktiviert hat.

24. Verfahren nach Anspruch 23, wobei das Wecksignal (Swake) ein Niederfrequenzsignal ist, vorzugsweise in einem Bereich von 10 KHz bis 1 MHz.

25. Verfahren nach Anspruch 23 oder 24, wobei das Kennzeichnungssignal (Stag) ein Hochfrequenzsignal ist, vorzugsweise in einem Bereich von 500 MHz bis 10 GHz.

## Revendications

1. Système (10) pour suivre la position de personnes ou d'éléments dans des installations (1) comportant une pluralité de pièces (2) pour recevoir une pluralité de personnes ou d'éléments, telles que des bateaux, bâtiments ou plates-formes en mer, ledit système (10) comprenant :
- un système de détection d'incendie (20) comprenant :
- une pluralité de capteurs de détection d'incendie (21) agencés dans lesdites pièces (2), chaque capteur de détection d'incendie (21) étant configuré pour générer un signal d'alarme (Sal),
- au moins une unité de traitement de données d'incendie (22, 23) en communication de signal avec ladite pluralité de capteurs de détection d'incendie (21) et adaptée pour recevoir les signaux d'alarme (Sal) générés par les capteurs de détection d'incendie (21),
- une pluralité d'étiquettes RFID (30), chaque étiquette RFID (30) étant adaptée pour être associée à une personne ou un élément respectif, destiné à se déplacer dans lesdites pièces (2),
- une pluralité de lecteurs RFID (31) agencés dans lesdites pièces (2), chaque lecteur RFID (31) étant agencé au niveau d'un capteur de détection d'incendie respectif (21) et étant configuré pour détecter un étiquette RFID (30) et pour générer un signal de position (Sp) représentatif de l'étiquette RFID détectée (30) et la position de ladite étiquette RFID (31),
- au moins une unité de traitement de données de position (32) en communication de signal avec ladite pluralité de lecteurs RFID (31) et adaptée pour recevoir les signaux de position (Sp) générés par lesdits lecteurs RFID (31),
- au moins une ligne bipolaire (40) s'étendant dans ladite pluralité de pièces (2), ladite au moins une ligne bipolaire (40) étant configurée pour :
• établir une communication de signal entre ladite pluralité de capteurs de détection d'incendie (21) et ladite au moins une unité de traitement de données d'incendie (22),
• établir une communication de signal entre ladite pluralité de lecteurs RFID (31) et ladite au moins une unité de traitement de données de position (32),
• alimenter en énergie ladite pluralité de capteurs de détection d'incendie (21) et ladite pluralité de lecteurs RFID (31),
- chaque lecteur RFID (31) étant configuré pour générer un signal de réveil (Swake) adapté pour activer une étiquette RFID (30) dans une zone prédéfinie (A) autour dudit lecteur RFID (31), ladite zone prédéfinie (A) correspondant au lobe du signal de réveil (Swake) généré par le lecteur RFID (31) ;
- chaque étiquette RFID (30) étant associée à un code d'identification (ID), **caractérisé en ce que**
• ledit signal de réveil (Swake) comprend des données (PosR) représentatives de la position du lecteur RFID (31) qui a généré ledit signal de réveil (Swake),
• à la réception d'un signal de réveil (Swake) par un lecteur RFID (31), chaque étiquette RFID (30) est configurée pour générer un signal d'étiquette (Stag), qui comprend des données représentatives de son propre code d'identification (ID) et les données (PosR) représentatives de la position du lecteur RFID (31) qui a généré ledit signal de réveil (Swake).

2. Système (10) selon la revendication 1, dans lequel ledit système de détection d'incendie (20) comprend un conduit de câbles (25) s'étendant dans ladite pluralité de pièces (2), ladite au moins une ligne bipolaire (40) étant posée dans ledit conduit de câbles (25).

3. Système (10) selon la revendication 1 ou 2, dans lequel :
- ladite au moins une ligne bipolaire est une unique ligne bipolaire (41),
- lesdits signaux d'alarme (Sal) et lesdits signaux de position (Sp) sont transmis sur ladite unique ligne bipolaire (41),
- ladite unique ligne bipolaire (41) étant configurée pour alimenter en énergie ladite pluralité de capteurs de détection d'incendie (21) et ladite pluralité de lecteurs RFID (31).

4. Système (10) selon la revendication 3, dans lequel lesdits signaux d'alarme (Sal) et lesdits signaux de position (Sp) sont transmis sur ladite unique ligne bipolaire (41), sont codés par modulation analogique ou modulation numérique et sont séparés en fréquence en utilisant deux bandes de fréquences distinctes.

5. Système (10) selon la revendication 3, dans lequel lesdits signaux d'alarme (Sal) et lesdits signaux de position (Sp) sont transmis sur ladite unique ligne bipolaire (41), sont codés par modulation analogique ou modulation numérique, occupent la même bande de fréquences, et sont séparés dans le temps.

6. Système (10) selon la revendication 1 ou 2, dans lequel ladite au moins une ligne bipolaire comprend :
- une première ligne bipolaire (42) configurée pour établir une communication de signal entre lesdits capteurs de détection d'incendie (21) et ladite au moins une unité de traitement de données d'incendie (22) et pour alimenter en énergie lesdits capteurs de détection d'incendie (21),
- une deuxième ligne bipolaire (43), s'étendant adjacente à ladite première ligne bipolaire (42), ladite deuxième ligne bipolaire (43) étant configurée pour établir une communication de signal entre lesdits lecteurs RFID (31) et ladite au moins une unité de traitement de données de position (32) et pour alimenter en énergie lesdits lecteurs RFID (31).

7. Système (10) selon la revendication 6, dans lequel ladite première ligne bipolaire (42) et ladite deuxième ligne bipolaire (43) sont incorporées dans un unique câble.

8. Système (10) selon la revendication 6, dans lequel ladite première ligne bipolaire (42) et ladite deuxième ligne bipolaire (43) sont incorporées dans des câbles distincts.

9. Système (10) selon l'une quelconque des revendications 1 à 8, dans lequel chaque lecteur RFID (31) est agencé directement adjacent à un capteur de détection d'incendie (21) respectif.

10. Système (10) selon l'une quelconque des revendications 1 à 9, dans lequel, dans chaque paire composée d'un lecteur RFID (31) et de son capteur de détection d'incendie (21) respectif, le capteur de détection d'incendie (21) est disposé à l'intérieur d'une première enceinte (24) et le lecteur RFID (31) est disposé dans une deuxième enceinte (34), ladite deuxième enceinte (34) étant séparée de ladite première enceinte (24) et adjacent à ladite première enceinte (24).

11. Système (10) selon l'une quelconque des revendications 1 à 9 dans lequel, dans chaque paire composée d'un lecteur RFID (31) et de son capteur de détection d'incendie (21) respectif, le capteur de détection d'incendie (21) et le lecteur RFID (31) sont disposés dans une unique enceinte.

12. Système (10) selon la revendication 11, dans lequel ledit signal de réveil (Swake) est un signal basse fréquence, de préférence dans une plage de 10 KHz à 1 MHz.

13. Système (10) selon la revendication 11 ou 12, dans lequel la largeur maximale (Lmax) de chaque lobe est inférieure ou égale à la distance (D) entre des lecteurs RFID (31) contigus.

14. Système (10) selon l'une quelconque des revendications 11 à 13, dans lequel les lobes des signaux de réveil (Swake) de deux lecteurs RFID (31) contigus ont une forme susceptible d'éviter un chevauchement mutuel.

15. Système (10) selon la revendication 1, dans lequel ledit signal d'étiquette (Stag) est un signal haute fréquence, de préférence dans une plage de 500 MHz à 10 GHz.

16. Système (10) selon la revendication 1, dans lequel chaque lecteur RFID (31) est configuré pour recevoir ledit signal d'étiquette (Stag) généré par une étiquette RFID (30) activée et pour envoyer un signal de position (Sp) à l'au moins une unité de traitement de données de position (32), dans lequel ledit signal de position (Sp) comprend le code d'identification (ID) de l'étiquette RFID (30) et les données (PosR) représentatives de la position du lecteur RFID (31) qui a activé ladite étiquette RFID (30).

17. Système (10) selon l'une quelconque des revendications 1 à 16, dans lequel chaque lecteur RFID (31) est placé dans une enceinte et comprend une antenne rayonnante pour rayonner un signal de réveil (Swake) qui peut activer une étiquette RFID (30).

18. Système (10) selon la revendication 17, dans lequel ladite antenne est située à l'extérieur de ladite enceinte.

19. Système (10) selon la revendication 18, dans lequel ladite antenne est située à l'extérieur de ladite enceinte pour rayonner ledit signal de réveil (Swake) à une distance dudit lecteur RFID (31).

20. Système (10) selon l'une quelconque des revendications 1 à 19, dans lequel ladite au moins une unité de traitement de données d'incendie comprend une première unité de traitement de données d'incendie (22) et une deuxième unité de traitement de données d'incendie (23), lesdites première et deuxième unités de traitement de données d'incendie (22, 23) étant en communication de signal avec ladite pluralité de capteurs de détection d'incendie (21), et étant adaptées pour recevoir les signaux d'alarme (Sal) générés par lesdits capteurs de détection d'incendie (21).

21. Système (10) selon l'une quelconque des revendications 1 à 20, dans lequel ladite au moins une unité de traitement de données de position comprend une première unité de traitement de données de position (32) et une deuxième unité de traitement de données de position (33), lesdites première et deuxième unités de traitement de données de position d'incendie (32, 33) étant en communication de signal avec ladite pluralité de lecteurs RFID (31), et étant adaptées pour recevoir lesdits signaux de position (Sp) générés par lesdits lecteurs RFID (31).

22. Système (10) selon l'une quelconque des revendications 1 à 21, comprenant une interface graphique (35) configurée pour afficher lesdits signaux de position (Sp) sous forme graphique.

23. Procédé (10) pour suivre la position de personnes ou d'éléments dans des installations (1) comportant une pluralité de pièces (2) pour recevoir une pluralité de personnes ou d'éléments, en utilisant un système (10) selon l'une quelconque des revendications 1 à 25, ledit procédé **comprenant les étapes** suivantes :
- la génération, par un lecteur RFID (31), d'un signal de réveil (Swake) qui peut activer une étiquette RFID (30) dans une zone prédéfinie (A) autour dudit lecteur RFID (31), ladite zone prédéfinie (A) correspondant au lobe du signal de réveil (Swake) généré par le lecteur RFID (31), dans lequel ledit signal de réveil (Swake) comprend des données (PosR) représentatives de la position dudit lecteur RFID (31),
- la réception, par ladite étiquette RFID (30) activée, dudit signal de réveil (Swake),
- la génération, par ladite étiquette RFID (30) activée, d'un signal d'étiquette (Stag) comprenant des données représentatives de son propre code d'identification (ID) et les données (PosR) représentatives de la position du lecteur RFID (31) qui a généré ledit signal de réveil (Swake),
- la réception, par un lecteur RFID (31), dudit signal d'étiquette (Stag) généré par ladite étiquette RFID (30) activée et l'envoi d'un signal de position (Sp) à ladite unité de traitement de données de position (32), dans lequel ledit signal de position (Sp) comprend le code d'identification (ID) de ladite étiquette RFID (30) et les données (PosR) représentatives de la position du lecteur RFID (31) qui a activé l'étiquette RFID (30).

24. Procédé selon la revendication 23, dans lequel ledit signal de réveil (Swake) est un signal basse fréquence, de préférence dans une plage de 10 KHz à 1 MHz.

25. Procédé selon la revendication 23 ou 24, dans lequel ledit signal d'étiquette (Stag) est un signal haute fréquence, de préférence dans une plage de 500 MHz à 10 GHz.
